# EUROPÄISCHE PATENTSCHRIFT

(11) **EP 0 892 403 B1**
(45) Veröffentlichungstag und Bekanntmachung des Hinweises auf die Patenterteilung: **16.02.2005**
(21) Anmeldenummer: 98201891.3
(22) Anmeldetag: 08.06.1998
(51) Int. Cl.: G11B 17/26

(54) **Wechsler-Gerät für Informationsplatten**
Disc changer
Changeur de disques

(30) Priorität: 11.06.1997 DE 19724542
(43) Veröffentlichungstag der Anmeldung: 20.01.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Haupt, Martin, Röntgenstrasse 24, 22335 Hamburg (DE); Kletzl, Franz, Röntgenstrasse 24, 22335 Hamburg (DE); Nemeth, Robert, Röntgenstrasse 24, 22335 Hamburg (DE)
(74) Vertreter: von Laue, Hanns-Ulrich, Dipl.-Ing.

(56) Entgegenhaltungen:
- EP-A- 0 391 424
- EP-A- 0 833 324
- DE-A- 4 404 006
- GB-A- 2 296 811
- US-A- 4 589 101
- PATENT ABSTRACTS OF JAPAN vol. 018, no. 429 (P-1785), 10. August 1994 & JP 06 131793 A (CLARION CO LTD), 13. Mai 1994

## Beschreibung

Die Erfindung betrifft ein Wechsler-Gerät für Informationsplatten mit
- einer Stapeleinheit zur Stapelung von wenigstens zwei Informationsplatten in wenigstens zwei Stapelpositionen,
- einer Lese/Schreib-Einheit zum Lesen von auf den Informationsplatten gespeicherten Informationen und/oder zum Schreiben von Informationen auf die Informationsplatten in einer Spielposition,
wobei eine Auswurfposition vorgesehen ist, in der jeweils eine Informationsplatte aus dem Gerät entnehmbar ist.

Ein derartiges Wechsler-Gerät ist aus der EP-A-743 639 bekannt. Dieses bekannte Wechsler-Gerät weist eine Stapeleinheit auf, die in einer vertikalen Richtung verfahrbar ist. Es sind zwei longitudinale Führungen vorgesehen, mittels derer jeweils eine Informationsplatte translatorisch von der Auswurfposition in die Spielposition und in die Stapeleinheit transportierbar ist. Die Spielposition ist zwischen der Auswurfposition und der Stapeleinheit vorgesehen, wobei sich der Mittelpunkt der in der Stapeleinheit gestapelten Informationsplatten außerhalb des Umfangsrandes der sich in der Spielposition befindlichen Informationsplatte befindet. Ein derartiges Wechsler-Gerät hat eine Bautiefe, die mindestens 1,5-mal so groß ist wie der Durchmesser der Informationsplatten.

Die GB-A-2 296 811, die zur Abgrenzung in der zweiteiligen Form werwendet wird beschreibt ein Wechsler-Gerät, bei dem Informationsträger von einer Auswurfposition mittels rotatorisch gelagerter Laden in eine Stapelpostion und von dort in eine Spielposition gebracht werden können.

Die EP-A-0 391 424, beschreibt ein Wechsler-Gerät für CD-Singles, bei dem CD-Singles von einer Auswurfposition mittels horizontaler und vertikaler Verschiebung in eine Ladeposition gebracht werden können.

Die US 4 589 101 beschreibt ein Lese/Schreib-Gerät für Informationsträger, an das eine externe Informationsträger-Wechslerbox angekoppelt werden kann.

Es ist Aufgabe der Erfindung, ein anderes Wechsler-Gerät zu schaffen, das mit einer geringeren Bautiefe realisierbar ist.

Diese Aufgabe ist dadurch gelöst, daß Transportmittel zum Transport der Informationsplatten auf einer kurvenförmigen Ladebahn von der Auswurfposition in eine Ladeposition der Stapeleinheit vorgesehen sind.

Unter kurvenförmiger Ladebahn wird verstanden, daß die Ladebahn nicht orthogonal zu der Vorderkante des Wechsler-Gerätes verläuft und daß dementsprechend die Informationsplatten zwischen der Auswurfposition und der Ladeposition eine seitliche Relativbewegung parallel zu der Vorderkante des Wechsler-Gerätes ausführen.
Unter kurvenförmiger Ladebahn wird somit auch eine geradlinige Ladebahn verstanden, die schräg zu der Vorderkante des Wechsler-Gerätes verläuft.

Zum Transport der Informationsplatten in die Stapeleinheit wird jeweils eine einzelne Informationsplatte z.B. von der Hand einer Bedienperson in die Auswurfposition gebracht. Diese einzelne Informationsplatte wird dann mittels der Transportmittel auf der kurvenförmigen Ladebahn in die Ladeposition der Stapeleinheit überführt. Die Ladeposition der Stapeleinheit ist die Position, in die die einzelnen Informationsplatten nach dem Transport von der Auswurfposition in die Stapeleinheit zunächst überführt werden. Danach ist ein Transport in die Stapelpositionen der Stapeleinheit vorgesehen.

Die kurvenförmige Ladebahn ermöglicht eine größere Design-Freiheit bei der Konstruktion hinsichtlich der Anordnung der einzelnen Komponenten des Wechsler-Gerätes. Dies ist besonders für Anwendungen im Automobilbereich günstig, da hier der zur Verfügung stehende Bauraum, insbesondere beim Einbau in das Armaturenbrett eines Kraftfahrzeuges, beschränkt ist.

Mittels der kurvenförmigen Ladebahn kann eine Gerätetiefe realisiert werden, die kleiner als der 1,5-fache Durchmesser der Informationsplatten ist.

Eine vorteilhafte Ausgestaltung der Erfindung ist dadurch gekennzeichnet, daß die Spielposition zwischen der Auswurfposition und der Ladeposition vorgesehen ist.

Liegt die Spielposition zwischen der Auswurf- und der Ladeposition, so kann eine Informationsplatte von der Auswurfposition direkt in die Spielposition transportiert werden, ohne vorher in die Stapeleinheit transportiert werden zu müssen. Das Wechsler-Gerät kann daher auch wie ein Single-Informationsplatten-Abspielgerät benutzt werden.

Eine weitere vorteilhafte Ausgestaltung der Erfindung ist dadurch gekennzeichnet, daß die Spielposition versetzt zu der direkten Verbindungslinie zwischen der Ladeposition und der Auswurfposition angeordnet ist.

Die geeignete Anordnung der Spielposition ist für eine kompakte Bauweise des Wechsler-Gerätes sehr wichtig, da die Spielposition üblicherweise so angeordnet sein muß, daß der Mittelpunkt der Stapeleinheit außerhalb der Umfangsfläche der sich in der Spielposition befindenden Informationsplatte liegt.

Die versetzt zu der direkten Verbindungslinie zwischen der Auswurfposition und der Ladeposition angeordnete Spielposition ermöglicht insbesondere bei Wechsler-Geräten, deren Grundfläche im wesentlichen quadratisch ist, eine bessere Platzausnutzung des zur Verfügung stehenden Bauraums. Für den Einbau in das Armaturenbrett eines Kraftfahrzeugs steht vielfach nur ein Bauraum von 1 DIN, d.h. eine Breite von 178 mm, eine Tiefe von 155 mm und eine Höhe 50,5 mm zur Verfügung, der mit der versetzten Anordnung der Spielposition optimal nutzbar ist.

Eine weitere vorteilhafte Ausgestaltung der Erfindung ist dadurch gekennzeichnet, daß die Spielposition auf der Ladebahn liegt.

Liegt die Spielposition auf der Ladebahn, können dieselben Transportmittel sowohl für den Transport der Informationsplatte zwischen der Auswurf und der Ladeposition als auch für den Transport zwischen der Auswurf und der Spiel- bzw. für den Transport zwischen der Spiel- und der Ladeposition verwendet werden. Es ist kein zusätzlicher Transportmechanismus für den Übergang von der Ladebahn in die Spielposition erforderlich.

Eine weitere vorteilhafte Ausgestaltung der Erfindung ist dadurch gekennzeichnet, daß zum Transport der Informationsplatten zwischen Auswurf-, Spiel-, und Ladeposition ein erster Transportmechanismus und zum Transport der Informationsplatten in die Stapelpositionen der Stapeleinheit ein zweiter Transportmechanismus vorgesehen ist, wobei der erste Transportmechanismus zum Transport der Informationsplatten in der Ladeebene vorgesehen ist und der zweite Transportmechanismus zum Transport der Informationsplatten in einer vertikal zu der Ladeebene gerichteten Stapelrichtung.

Ein derartiges Wechsler-Gerät mit zwei senkrecht zueinander arbeitenden Transportmechanismen läßt sich einfach und kostengünstig realisieren.

Eine weitere vorteilhafte Ausgestaltung der Erfindung ist dadurch gekennzeichnet, daß der erste Transportmechanismus wenigstens eine erste und eine zweite mit Nuten versehene, in der Ladeebene bewegbare Führung für den Plattenrand der Informationsplatte aufweist, wobei die zweite Führung wenigstens ein drehend antreibbares erstes Transportrad aufweist.

Zum Transport der Informationsplatte greift der Plattenrand in die Nuten der ersten und der zweiten Führung ein. Die bewegbare Lagerung der ersten und der zweiten Führung ermöglicht es, daß sich diese gemäß der äußeren Kontur der Informationsplatte bewegen und so den Plattenrand der Informationsplatte flexibel führen können. Die Informationsplatte wird von der ersten und der zweiten Führung lediglich an ihren Rändern berührt, während die die Signale speichernde Oberfläche der Informationsplatte von den Führungen unberührt bleibt. Dadurch werden mögliche Beschädigungen der Oberfläche der Informationsplatte vermieden. Das drehend antreibbare erste Transportrad übt eine Kraft in Richtung der Ladeebene auf den Plattenrand der Informationsplatte aus und rollt dadurch die Informationsplatte zum Laden in das Gerät hinein bzw. zum Entladen aus diesem heraus.

Eine weitere vorteilhafte Ausgestaltung der Erfindung ist dadurch gekennzeichnet,
daß die erste Führung eine passive Stützführung ist,
daß eine dritte Führung mit einem zweiten Transportrad vorgesehen ist,
daß eine vierte Führung als passive Stützführung vorgesehen ist,
daß die erste, die zweite, die dritte und die vierte Führung einseitig gelagerte, in der Ladeebene verschwenkbare Schwenkarme aufweisen, daß die erste, zweite, dritte und die vierte Führung in Richtung auf die kurvenförmige Ladebahn vorgespannt sind,
daß das erste Transportrad im wesentlichen zum Transport der Informationsplatten zwischen der Auswurfposition und einer Übergabeposition und das zweite Transportrad im wesentlichen zum Transport der Informationsplatten von der Übergabeposition in die Ladeposition vorgesehen ist.

Mit einer derartigen Anordnung läßt sich die kurvenförmige Ladebahn einfach und kostengünstig realisieren. In der Auswurfposition wird die Informationsplatte von der ersten und der zweiten Führung gehalten. Mittels Drehen des ersten Transportrades der zweiten Führung wird die Informationsplatte dann auf der kurvenförmigen Ladebahn in das Gerät hinein gerollt. Die erste und die zweite Führung verschwenken dabei entsprechend der äußeren Kontur der Informationsplatte und werden infolge der Vorspannung in Richtung auf die Ladebahn gegen den Plattenrand der Informationsplatte gedrückt. Zunächst wird die Informationsplatte im wesentlichen von der ersten und der zweiten Führung geführt. Das erste Transportrad ist zum Antrieb der Informationsplatte zwischen der Auswurfposition und der Übergabeposition vorgesehen. In der Übergabeposition übergibt das erste Transportrad die Antriebsfunktion an das zweite Transportrad, und die Informationsplatte wird von der Übergabeposition in die Ladeposition von dem zweiten Transportrad transportiert. Der Transport von der Ladeposition in die Auswurfposition erfolgt in umgekehrter Weise, d.h. zunächst wird die Informationsplatte im wesentlichen von dem zweiten Transportrad in die Übergabeposition transportiert und nachfolgend von dem ersten Transportrad von der Übergabeposition in die Auswurfposition. Im Bereich der Übergabeposition wird in Abhängigkeit der Transportrichtung der Informationsplatte entweder der Schwenkarm der zweiten Führung mit dem ersten Transportrad vom Plattenrand weggeschwenkt und der Schwenkarm der dritten Führung mit dem zweiten Transportrad auf den Plattenrand zu geschwenkt, wodurch die Nut des ersten Transportrades außer Eingriff mit dem Plattenrand kommt und die Nut des zweiten Transportrades mit dem Plattenrand in Eingriff gebracht wird, oder in der entgegengesetzten Transportrichtung werden in entsprechender Weise der Schwenkarm der zweiten Führung in Richtung auf den Plattenrand zu geschwenkt und der Schwenkarm der dritten Führung vom Plattenrand weg geschwenkt.

Die vierte Führung, die als passive Stützführung vorgesehen ist, ist vorzugsweise in einem rückwärtigen Bereich des Wechsler-Gerätes angeordnet und übernimmt im Verlauf des Ladevorganges die Funktion der ersten passiven Stützführung. Die vierte Führung kann sowohl an der Chassisplatte als auch auf der Leseeeinheit angeordnet sein. In einem Übergangsbereich sind jedoch sowohl die erste passive Stützführung als auch die vierte passive Stützführung gegen den Plattenrand der Informationsplatte gedrückt.

Eine weitere vorteilhafte Ausgestaltung der Erfindung ist dadurch gekennzeichnet, daß die erste und die dritte Führung um eine gemeinsame Schwenkachse gelagert sind.

Eine derartige Lagerung um eine gemeinsame Schwenkachse ermöglicht es, das erste und das zweite Transportrad über ein Zwischenrad, das drehbar um die gemeinsame Schwenkachse gelagert ist, von einem einzigen Motor anzutreiben.

Eine weitere vorteilhafte Ausgestaltung der Erfindung ist dadurch gekennzeichnet, daß die Lese/Schreib-Einheit eine Basisplatte und eine Laserplatte aufweist, daß die Basisplatte und die Laserplatte mittels Dämpfern gekoppelt sind, daß die Basisplatte an der Chassisplatte verschiebbar angelagert ist und daß an der Laserplatte eine Klemmvorrichtung zum Festklemmen der Informationsplatte in der Spielposition und eine optische Einheit zum Lesen von auf der Informationsplatte gespeicherten Informationen angeordnet sind.

Eine derartige Konstruktion ermöglicht eine gute Entkopplung zwischen der Lese/Schreib-Einheit und der Chassisplatte, um äußere Vibrationen und Erschütterungen von der Lese/Schreib-Einheit fernzuhalten.

Dies ist insbesondere bei Verwendung des CD-Wechsler-Gerätes in einem Kraftfahrzeug wichtig.

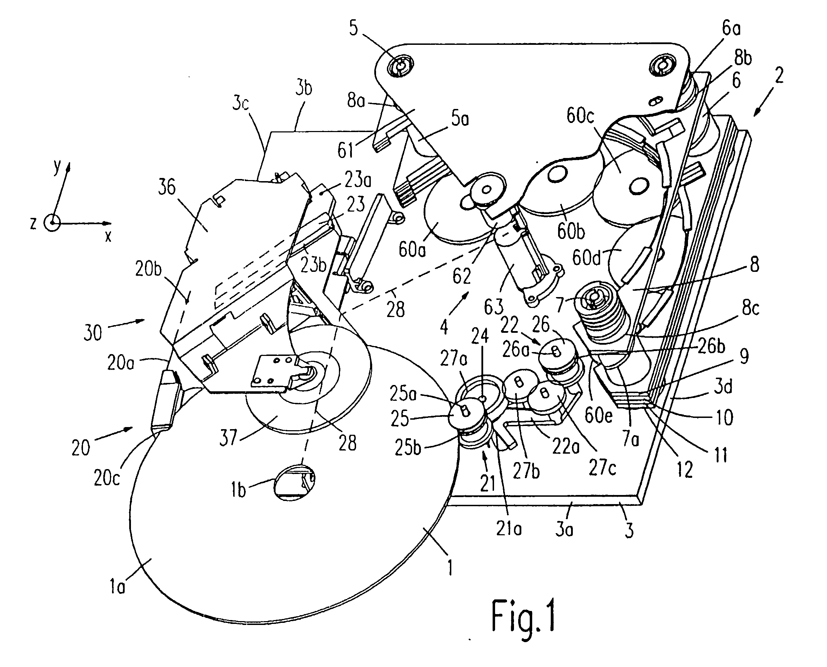

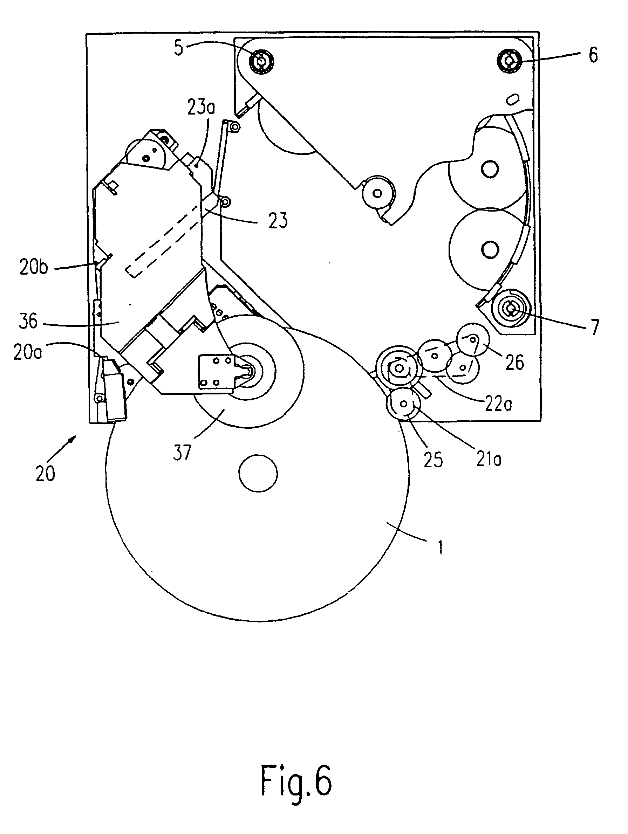

Ein schematisch dargestelltes Ausführungsbeispiel der Erfindung wird nachfolgend anhand der Zeichnung in den Fig. 1 bis 13 näher erläutert. Es zeigen:
Fig. 1 eine perspektivische Ansicht eines Wechsler-Gerätes für Informationsplatten mit einer Informationsplatte, die sich in einer Auswurfposition befindet, in der sie von der Hand einer Bedienperson aus dem Gerät entnommen werden kann, sowie mit einer Leseeinheit zum Lesen von auf der Informationsplatte gespeicherten Informationen und einer Stapeleinheit zur Stapelung von wenigstens zwei Informationsplatten, sowie mit einer ersten, einer zweiten, einer dritten und einer vierten Führung zum Transport der Informationsplatte von der Auswurfposition in eine Spielposition und in eine Ladeposition,
Fig 2 eine Vorderansicht auf das Wechsler-Gerät in der Auswurfstellung gemäß Fig. 1,
Fig.3 eine perspektivische Darstellung der Leseeinheit,
Fig. 4 eine perspektivische Ansicht von Teilen des Wechsler-Gerätes mit einer Schiebeplatte, die zur Verschiebung der nicht dargestellten Leseeinheit und zur Steuerung des Verschwenkens der ersten, der zweiten, der dritten und der vierten Führung vorgesehen ist, sowie zur Steuerung von Führungszapfen der Stapeleinheit und eines Klemmarms der Leseeeinheit
Fig. 5 eine Seitenansicht auf das Wechsler-Gerät in der Auswurfposition gemäß Fig. 1,
Fig. 6 eine Draufsicht auf des Wechsler-Gerät in der Auswurfposition gemäß Fig. 1,
Fig. 7 eine Seitenansicht auf das Wechsler-Gerät in einer ersten Zwischenposition, in der die Informationsplatte zwischen einem Klemmteller und einem Antriebsteller der Leseeinheit freiliegt, wobei die Informationsplatte ausgehend von dieser ersten Zwischenposition sowohl in die Spielposition als auch in die Ladeposition transportierbar ist.
Fig. 8 eine Seitenansicht auf das Wechsler-Gerät in einer zweiten Zwischenposition, in der die Informationsplatte zwischen Klemmteller und Antriebsteller der Leseeinheit festgeklemmt ist,
Fig.9 eine Draufsicht auf das Wechsler-Gerät in der ersten Zwischenposition, wobei die Informationsplatte von der ersten, der zweiten, der dritten und der vierten Führung gehalten wird,
Fig. 10 eine Draufsicht auf das Wechsler-Gerät in einer Spielposition, wobei die erste, die zweite, die dritte und die vierte Führung von dem Plattenrand der Informationsplatte weggeschwenkt sind, die Informationsplatte zwischen dem Antriebsteller und dem Klemmteller der Leseeinheit geklemmt ist und die auf der Informationsplatte gespeicherten Informationen mittels der Leseeinheit auslesbar sind,
Fig. 11 eine Seitenansicht des Wechsler-Gerätes in der Spielposition,
Fig. 12 eine Draufsicht auf das Wechsler-Gerät mit einer Informationsplatte in der Ladeposition,
Fig. 13 eine perspektivische Ansicht des Wechsler-Gerätes gemäß Fig. 12 mit einer Informationsplatte in der Ladeposition,

Fig. 1 zeigt eine perspektivische Ansicht eines Wechsler-Gerätes für Informationsplatten mit einer Informationsplatte 1, die sich in einer Auswurfposition befindet, in der sie von der Hand einer Bedienperson aus dem Gerät entnommen werden kann bzw. in die sie von der Hand der Bedienperson zum Laden in das Gerät eingebracht wird. Die Informationsplatte 1 weist einen kreisförmigen Plattenrand 1a und ein Mittelloch 1b auf. auf. Das Wechsler-Gerät ist in einem nur teilweise dargestellten Gehäuse 2 angeordnet, welches als Grundplatte eine Chassisplatte 3 aufweist. Die Chassisplatte 3 weist eine Vorderkante 3a, eine Rückkante 3b, eine linke Seitenkante 3c sowie eine rechte Seitenkante 3d auf. Die Chassisplatte 3 erstreckt sich in einer x-y-Ebene, wobei die x-Richtung von links nach rechts in Richtung der Vorderkante 3a und die y-Richtung in Richtung der linken Seitenkante 3c definiert wird. Senkrecht zu der x-y-Ebene ist eine z-Richtung definiert. Gemäß der in der Fig. 1 gezeigten perspektivischen Darstellung ist in dem hinteren, rechten Bereich des Gehäuses 2 eine Stapeleinheit 4 angeordnet, welche eine erste Gewindespindel 5, eine zweite Gewindespindel 6 und eine dritte Gewindespindel 7 aufweist, die sich vertikal zu der Chassisplatte 3 in der z-Richtung erstrecken. Die erste Gewindespindel 5 weist ein Außengewinde 5a, die zweite Gewindespindel 6 ein Außengewinde 6a und die dritte Gewindespindel 7 ein Außengewinde 7a auf. Es sind ein erstes Ablagefach 8, ein zweites Ablagefach 9, ein drittes Ablagefach 10, ein viertes Ablagefach 11 und ein fünftes Ablagefach 12 vorgesehen, die in der z-Richtung übereinander angeordnet sind und welche zur Ablage jeweils einer Informationsplatte vorgesehen sind. Das erste Ablagefach 8 weist eine erste Öffnung 8a auf, in die das Außengewinde 5a der ersten Gewindespindel 5 eingreift, eine zweite Öffnung 8b, in die das Außengewinde 6a der zweiten Gewindespindel 6 eingreift und eine dritte Öffnung 8c, in die das Außengewinde 7a der dritten Gewindespindel 7 eingreift. In analoger Weise weisen das zweite Ablagefach 9, das dritte Ablagefach 10, das vierte Ablagefach 11 und das fünfte Ablagefach 12 ebenfalls jeweils drei nicht näher bezeichnete Öffnungen auf, in die die Außengewinde der ersten Gewindespindel 5, der zweiten Gewindespindel 6 und der dritten Gewindespindel 7 eingreifen. Die erste Gewindespindel 5, die zweite Gewindespindel 6 und die dritte Gewindespindel 7 sind mittels einer Zahnradkette 60, bestehend aus den Zahnrädern 60a, 60b, 60c, 60d und 60e von einem nicht näher dargestellten Antriebsmechanismus antreibbar. Alternativ ist auch ein Antrieb mittels eines Zahnriemens möglich. Mittels der Rotation der Gewindespindeln 5, 6 und 7 lassen sich die Ablagefächer 8, 9, 10, 11 und 12 in der vertikalen z-Richtung bewegen.
Im Zentrum der Stapeleinheit 4 ist an einer oberen Deckelplatte 61 ein oberer Führungszapfen 62 und an der Chassisplatte 3 ein unterer Führungszapfen 63 vorgesehen. Der obere Führungszapfen 62 und der untere Führungszapfen 63 können mittels eines nicht näher dargestellten Antriebsmechanismus in der z-Richtung verfahren werden.

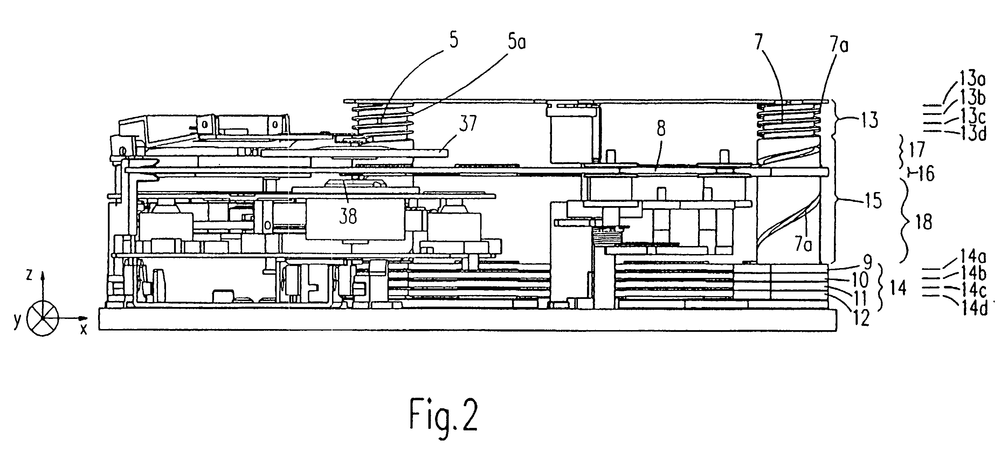

Die Funktionsweise der Stapeleinheit 4 wird nachfolgend anhand der Fig. 2 näher erläutert, welche eine Vorderansicht auf das Wechsler-Gerät in der Auswurfstellung gemäß Fig. 1 darstellt. Die dritte Gewindespindel 7 und in entsprechender Weise die erste Gewindespindel 5 und die in Fig. 2 nicht erkennbare zweite Gewindespindel 6 weisen einen oberen Stapelbereich 13, einen unteren Stapelbereich 14 und zwischen dem oberen Stapelbereich 13 und dem unteren Stapelbereich 14 einen Mittelbereich 15 auf. Der Mittelbereich 15 weist eine vertikale Ladeposition 16 auf, die durch einen oberen Abstandsbereich 17 vom oberen Stapelbereich 13 und durch einen unteren Abstandsbereich 18 von dem unteren Stapelbereich 14 getrennt ist. Das Außengewinde 7a der dritten Gewindespindel 7 und in entsprechender Weise die Außengewinde 6a und 5a der zweiten Gewindespindel 6 bzw. der ersten Gewindespindel 5 weisen in der Ladeposition 16 eine Steigung auf, die in einem Drehwinkelbereich von 45° gleich Null ist. In dem oberen Abstandsbereich 17 und dem unteren Abstandsbereich 18 weisen die Gewindespindeln 5, 6 und 7 jeweils eine Steigung auf, die im wesentlichen durch die vertikale Höhe in z-Richtung der Ablagefächer 8, 9, 10, 11 und 12 bestimmt ist. Die Steigung der Gewindespindeln 5, 6 und 7 ist in dem oberen Abstandsbereich 17 und in dem unteren Abstandsbereich 18 deutlich größer als die Steigung in der Ladeposition 16 und die Steigung in dem oberen Stapelbereich 13 und dem unteren Stapelbereich 14. In der in der Fig. 2 gezeigten Darstellung befindet sich das erste Ablagefach 8 in der Ladeposition, und die übrigen Ablagefächer 9, 10, 11 und 12 befinden sich in dem unteren Stapelbereich 14. Der untere Stapelbereich 14 weist eine erste Stapelposition 14a, eine zweite Stapelposition 14b, eine dritte Stapelposition 14c und eine vierte Stapelposition 14d auf. Der obere Stapelbereich 13 weist eine erste Stapelposition 13a, eine zweite Stapelposition 13b, eine dritte Stapelposition 13c und eine vierte Stapelposition 13d auf. In der in der Fig. 2 gezeigten Darstellung befindet sich in der ersten Stapelposition 14a des unteren Stapelbereiches 14 das zweite Ablagefach 9, in der zweiten Stapelposition 14b das dritte Ablagefach 10, in der dritten Stapelposition 14c das vierte Ablagefach 11 und in der vierten Stapelposition 14d das fünfte Ablagefach 12. Werden ausgehend von der in der Fig. 2 gezeigten Darstellung die Gewindespindeln 5, 6 und 7 gedreht, so wandert das sich in der Ladeposition 16 befindliche erste Ablagefach 8 in die vierte Stapelposition 13d des oberen Stapelbereichs 13, das zweite Ablagefach 9 wandert in die Ladeposition 16, das dritte Ablagefach 10 wandert in die erste Stapelposition 14a, das vierte Ablagefach 11 in die zweite Stapelposition 14b und das fünfte Ablagefach 12 in die dritte Stapelposition 14c des unteren Stapelbereichs 14. In entsprechender Weise können auch das dritte Ablagefach 10, das vierte Ablagefach 11 und das fünfte Ablagefach 12 jeweils nacheinander in die Stapelposition 16 überführt werden. Mittels Rotation der Gewindespindeln 5, 6 und 7 kann somit jedes der sich in dem unteren Stapelbereich 14 befindenden Ablagefächer 9, 10, 11 und 12 nacheinander in die Ladeposition 16 und die Ablagefächer 9, 10 und 11 mittels weiterer Rotation in den oberen Stapelbereich 13 überführt werden.
Bei der vertikalen Bewegung der Ablagefächer 8, 9, 10, 11 und 12 werden die sich in diesen Ablagefächern befindlichen Informationsplatten mittels des oberen Führungszapfens 62 und des unteren Führungszapfens 63 in der z-Richtung geführt, indem der obere Führungszapfen 62 und der untere Führungszapfen 63 in die Mittellöcher 1b der Informationsplatten 1 eingreifen.

Die weitere Beschreibung des Wechsler-Gerätes erfolgt nachfolgend anhand der Fig. 1. Zum Transport der Informationsplatte 1 von der in der Fig. 1 gezeigten Auswurfposition in das erste, sich in der Ladeposition 16 gemäß Fig. 2 befindliche Ablagefach 8 sind eine erste Führung 20, eine zweite Führung 21, eine dritte Führung 22 und eine vierte Führung 23 vorgesehen. Die erste Führung 20 ist als passive Stützführung ausgebildet und mittels eines Schwenkarmes 20a schwenkbar um eine Schwenkachse 20b an der linken Seite der Chassisplatte 3 angelagert. Die erste Führung 20 weist eine V-förmige Nut 20c auf, die zur Führung des Plattenrandes 1a der Informationsplatte 1 vorgesehen ist. Die zweite Führung 21 ist gegenüberliegend auf der rechten Seite des Gehäuses 2 angeordnet und weist ein erstes Transportrad 25 auf, das drehbar um eine Drehachse 25a an einem Schwenkarm 21a angelagert ist. Der Schwenkarm 21a ist um eine Schwenkachse 24 verschwenkbar an der Chassisplatte 3 angelagert. Zum Transport der Informationsplatte 1 weist das erste Transportrad 25 eine V-förmige Nut 25b auf, die zur Aufnahme des Plattenrandes 1a der Informationsplatte 1 vorgesehen ist. Es ist eine dritte Führung 22 vorgesehen, die ein zweites Transportrad 26 aufweist, das um eine Drehachse 26a drehbar an einem Schwenkarm 22a angelagert ist. Der Schwenkarm 22a ist um dieselbe Schwenkachse 24, um die auch der Schwenkarm 21a der zweiten Führung 21 gelagert ist, an der Chassisplatte 3 angelagert. Das zweite Transportrad 26 weist ebenfalls eine V-förmige Nut 26b auf. Das erste Transportrad 25 und das zweite Transportrad 26 sind mittels eines Zwischengetriebes 27, bestehend aus drei Zwischenrädern 27a, 27b und 27c drehend antreibbar. Das Zwischenrad 27a ist drehbar um die Drehachse 24 gelagert und wird über eine nicht näher dargestellte Antriebskette von einem nicht dargestellten Motor angetrieben. Die Zwischenräder 27b und 27c sind auf dem Schwenkarm 22a drehbar angelagert.

Die erste Führung 20, die zweite Führung 21, die dritte Führung 22 und die vierte Führung 23 sind jeweils mittels nicht dargestellter Federn in Richtung auf eine kurvenförmige Ladebahn 28 vorgespannt.
In der in der Fig. 1 gezeigten Auswurfposition der Informationsplatte 1 wird die erste Führung 20 mit der Nut 20c und das erste Transportrad 25 mit der Nut 25b infolge der Federverspannung der Schwenkarme 20a und 21a gegen den Plattenrand 1a der Informationsplatte 1 gedrückt. Das zweite Transportrad 26 der dritten Führung 22 wird auf nicht näher dargestellte Weise entgegen der Federverspannung von der Stapeleinheit 4 weggedrückt, so daß mittels Rotation der Gewindespindeln 5, 6 und 7 jedes beliebige der Ablagefächer 8, 9, 10, 11 und 12 in die Ladeposition 16 überführt werden kann. Dabei ist das Transportrad 26 so weit weggeschwenkt, daß auch sich evtl. in den Ablagefächern 8, 9, 10, 11, und 12 befindliche Informationsplatten von dem zweiten Transportrad 26 nicht berührt werden.

Im vorderen linken Bereich des Wechsler-Gerätes ist eine Leseeinheit 30 verschiebbar an der Chassisplatte 3 angelagert.

An der Leseeinheit 30 ist die vierte Führung 23 angeordnet, die als passive Stützführung ausgebildet ist und um eine Schwenkachse 23a verschwenkbar an der Leseeinheit 30 angelagert ist. Die vierte Führung 23 weist eine V-förmige Nut 23b zur Führung des Plattenrandes 1a der Informationsplatte 1 auf.

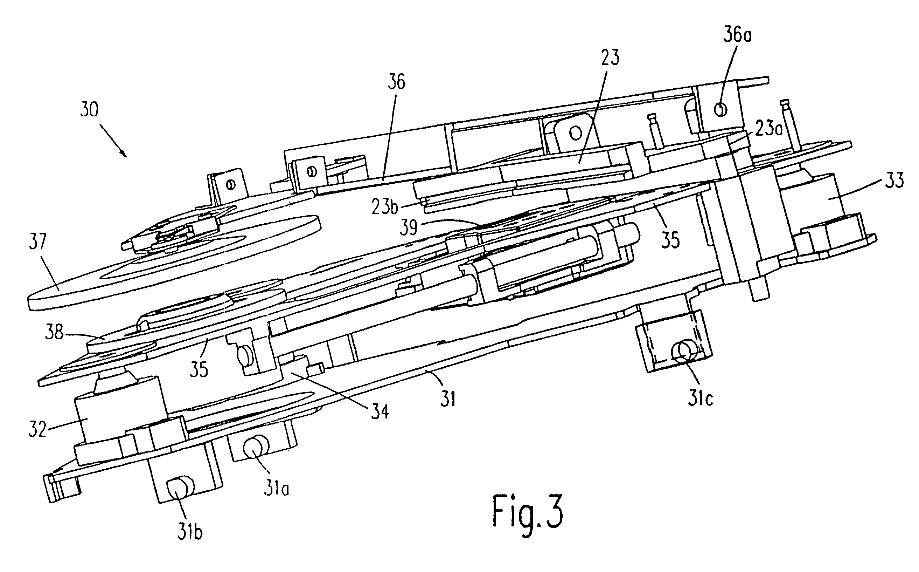

Der genauere Aufbau der Leseeinheit 30 wird nachfolgend anhand der Fig. 3 näher erläutert. Fig. 3 zeigt die Leseeinheit 30 in perspektivischer Darstellung. Die Leseeinheit 30 weist eine Basisplatte 31 mit einem ersten Führungszapfen 31a, einem zweiten Führungszapfen 31b und einem dritten Führungszapfen 31c auf. Die Basisplatte 31 ist mittels eines ersten Dämpfers 32, eines zweiten Dämpfers 33 und eines dritten Dämpfers 34 mit einer Laserplatte 35 gekoppelt. An der Laserplatte 35 ist ein Klemmarm 36 mit einem Klemmteller 37 drehbar um eine Klemmachse 36a angelagert. An der Laserplatte 35 ist ein Antriebsteller 38 angeordnet, der mittels eines nicht näher dargestellten Motors drehend antreibbar ist. Ferner ist an der Laserplatte 35 als optische Einheit eine Lasereinheit 39 verschiebbar angelagert. Die Basisplatte 31 der Leseeinheit 30 ist verschiebbar an der Chassisplatte 3 angelagert.

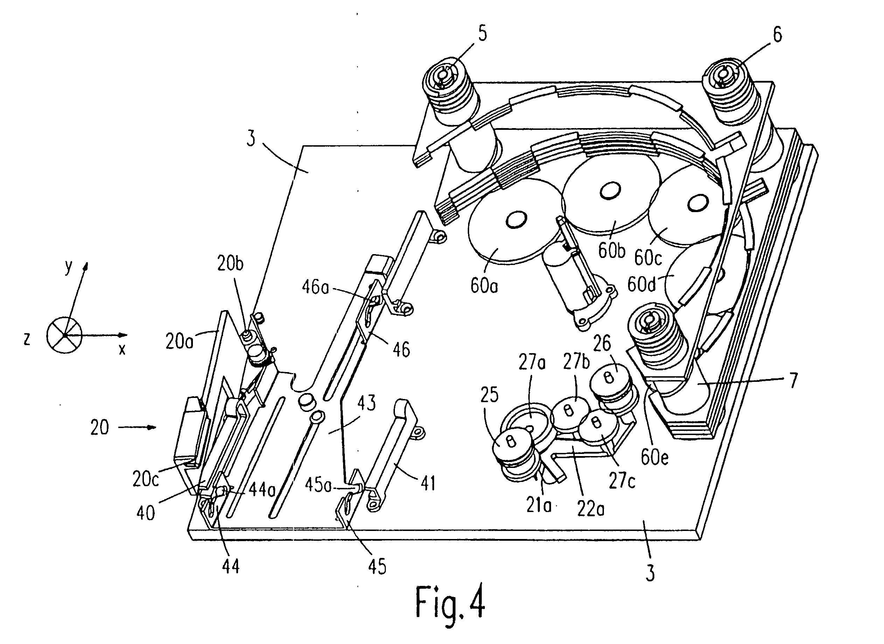

Zur Veranschaulichung dieser verschiebbaren Lagerung der Basisplatte 31 an der Chassisplatte 3 ist in der Fig. 4 eine perspektivische Ansicht von Teilen des Wechsler-Gerätes dargestellt, wobei die Leseeinheit 30, die Basisplatte 31 sowie die Informationsplatte 1 zur besseren Übersicht nicht dargestellt sind.

Zur Führung der Leseeinheit 30 sind gemäß Fig. 4 eine erste Führungsbahn 40 und eine zweite Führungsbahn 41 an der Chassisplatte 3 angeordnet. Die erste Führungsbahn 40 ist zur Führung des ersten Führungszapfens 31a der Basisplatte 31 und die zweite Führungsbahn 41 zur Führung des zweiten Führungszapfens 31b vorgesehen. Es ist eine Schiebeplatte 43 vorgesehen, die in der y-Richtung mittels eines nicht näher dargestellten Antriebsmechanismus bewegbar ist. Diese Schiebeplatte 43 weist einen ersten Schieber 44 mit einem V-förmigen Schiebeschlitz 44a, einen zweiten Schieber 45 mit einem V-förmigen Schiebeschlitz 45a und einen dritten Schieber 46 mit einem V-förmigen Schiebeschlitz 46a auf. Der V-förmige Schiebeschlitz 44a ist zur Führung des ersten Führungszapfens 31a der Basisplatte 31 und der V-förmige Schliebeschlitz 45a zur Führung des zweiten Führungszapfens 31b der Basisplatte 31 vorgesehen und der dritte V-förmige Schiebeschlitz 46a zur Führung des dritten Führungszapfens 31c der Basisplatte 31.

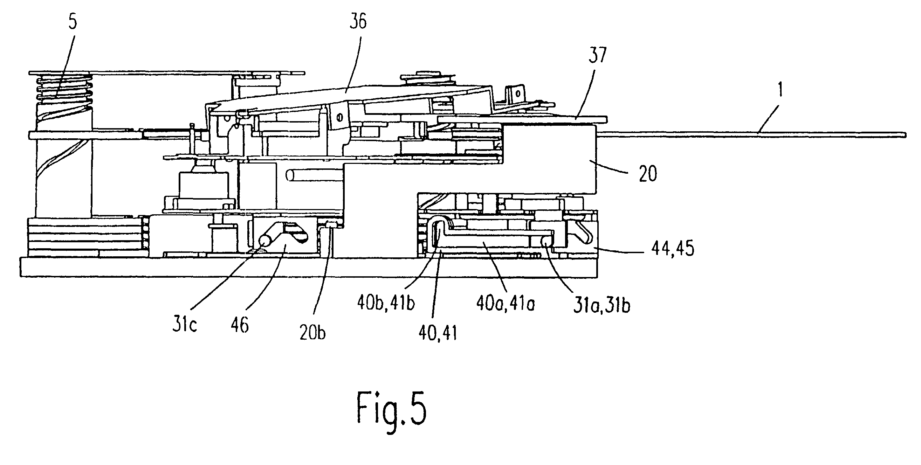

Fig. 5 zeigt eine Seitenansicht in x-Richtung auf das Wechslergerät in der Auswurfposition gemäß Fig. 1. Wie in der Fig. 5 zu erkennen ist, sind die erste Führungsbahn 40 und die zweite Führungsbahn 41 L-förmig ausgebildet und weisen dementsprechend horizontale Teilbahnen 40a bzw. 41a und vertikale Teilbahnen 40b bzw. 41b auf.

Der Klemmarm 36 mit dem Klemmteller 37 ist gemäß Fig. 5 geöffnet, d.h. der Klemmteller 37 drückt nicht auf den Antriebsteller 38.

Ausgehend von der in der Fig. 1 dargestellten Auswurfposition wird zum Transport der Informationsplatte 1 in die Stapeleinheit 4 bzw. in eine Spielposition das erste Transportrad 25 mittels des Zwischenrades 27a von einer nicht näher dargestellten Antriebseinheit drehend angetrieben, wodurch die Informationsplatte 1 unter Abstützung an der ersten Führung 20 auf der kurvenförmigen Ladebahn 28 in das Gerät hinein gerollt wird.

Gleichzeitig wird auch die Schiebeplatte 43 gemäß Fig. 5 und damit die Leseeinheit 30 in der y-Richtung in das Gerät eingefahren. Dabei wird der erste Führungszapfen 31a der Leseeinheit 30 in der ersten Führungsbahn 40 und der zweite Führungszapfen 31b in der zweiten Führungsbahn 41 geführt. Der erste Schieber 44, der zweite Schieber 45 und der dritte Schieber 46 üben dabei die Antriebskraft in der y-Richtung auf den ersten Führungszapfen 31a, den zweiten Führungszapfen 31b und den dritten Führungszapfen 31c der Basisplatte 31 aus.

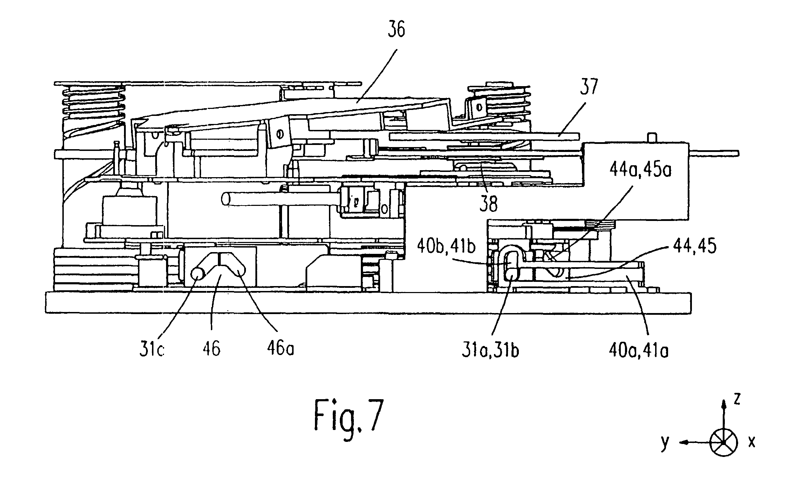

Fig. 7 zeigt eine Seitenansicht auf das Wechslergerät in einer ersten Zwischenposition. In dieser ersten Zwischenposition befinden sich der erste Führungszapfen 31a und der zweite Führungszapfen 31b der Basisplatte 31 am hinteren Ende der sich in der y-Richtung erstreckenden horizontalen Teilbahn 40a der ersten Führungsbahn 40 bzw. der horizontalen Teilbahn 41a der zweiten Führungsbahn 41. Mittels Weiterbewegen der Schieberplatte 43 in der y-Richtung werden der erste Führungszapfen 31a, der zweite Führungszapfen 31b und der dritte Führungszapfen 31c in den V-förmigen Schlitzen 44a, 45a bzw. 46a des ersten Schiebers 44, des zweiten Schiebers 45 bzw. des dritten Schiebers 46 in der z-Richtung nach oben gedrückt, wodurch eine zweite Zwischenposition erreicht wird. Der erste Führungszapfen 31a und der zweite Führungszapfen 31b gleiten dabei in den vertikalen Teilbahnen 40b und 41b hinauf.

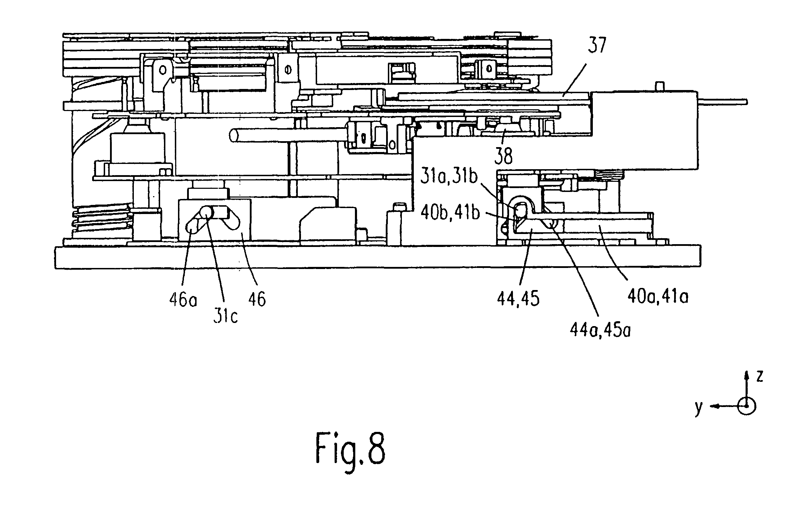

Die zweite Zwischenposition ist in Seitenansicht in der Fig. 8 dargestellt. In der Fig. 8 ist gezeigt, daß sich der erste Führungszapfen 31a und der zweite Führungszapfen 31b am oberen Ende der vertikalen Teilbahnen 40b bzw. 41b befinden. Dadurch ist die Leseeinheit 30 angehoben worden, wodurch der Klemmteller 37 auf nicht näher dargestellte Weise auf den Antriebsteller 38 gedrückt worden ist und die Informationsplatte 1 zwischen dem Klemmteller 37 und dem Antriebsteller 38 eingeklemmt worden ist.

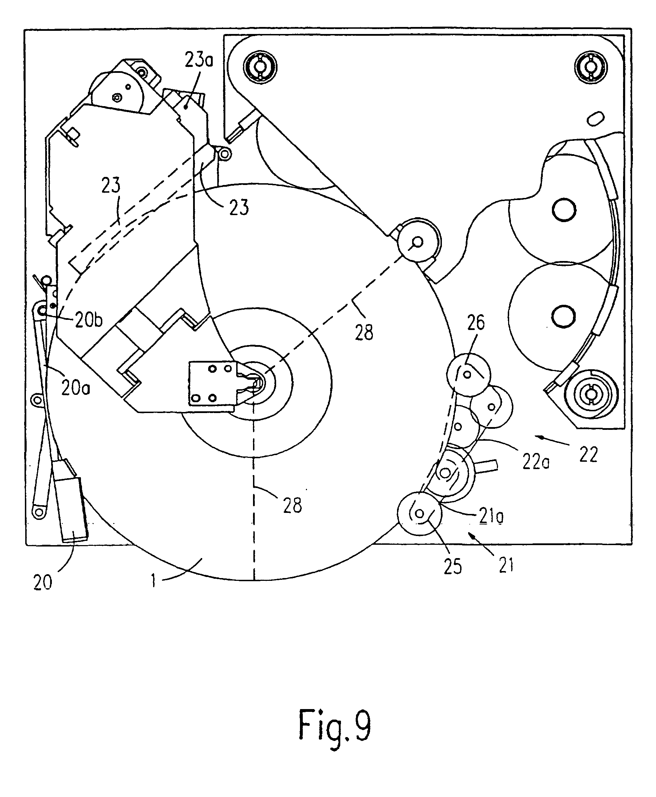

Fig. 9 zeigt die erste Zwischenposition gemäß Fig. 7 in Draufsicht. Aus Fig. 9 ist zu erkennen, daß die Informationsplatte 1 in der ersten Zwischenposition sowohl von der ersten Führung 20, der zweiten Führung 21 mit dem ersten Transportrad 25, der dritten Führung 22 mit dem Transportrad 26 als auch von der vierten Führung 23 gehalten wird. Die erste Führung 20, die zweite Führung 21, die dritte Führung 22 und die vierte Führung 23 werden infolge der Federvorspannung ihrer Schwenkarme gegen den Plattenrand 1a der Informationsplatte 1 gedrückt und fixieren die Informationsplatte 1 in der ersten Zwischenposition.

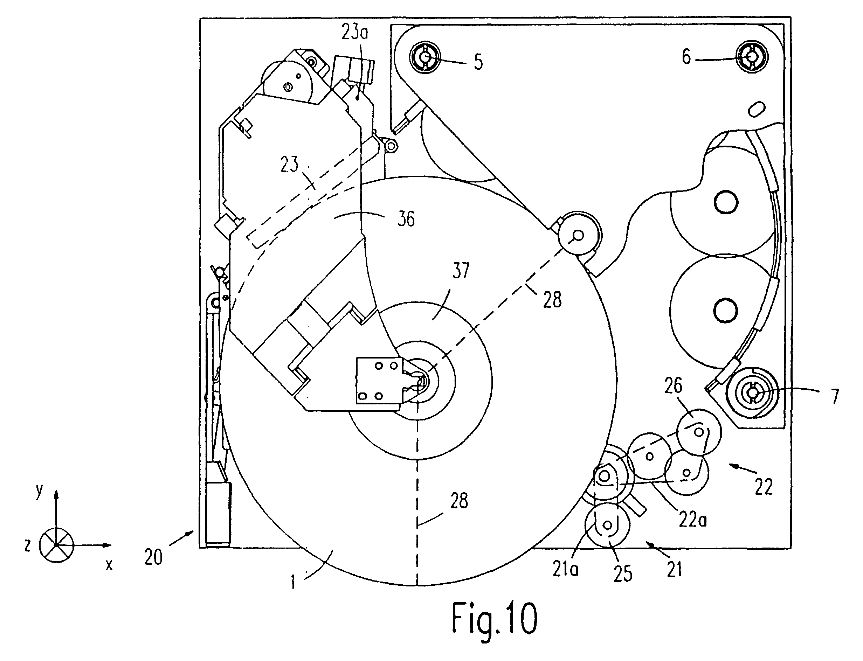

Fig. 10 zeigt das Wechslergerät mit der Informationsplatte 1 in einer Spielposition in Draufsicht. In dieser Spielposition sind die erste Führung 20, die zweite Führung 21 mit dem ersten Transportrad 26, die dritte Führung 22 mit dem zweiten Transportrad 26 sowie die vierte Führung 23 von der Informationsplatte 1 weggeschwenkt, so daß die V-förmigen Nuten dieser Führungen nicht mehr auf den Plattenrand der Informationsplatte 1 einwirken. Das Wegschwenken der ersten Führung 20, der zweiten Führung 21, der dritten Führung 22 und der vierten Führung 23 wird von der Bewegung der Schieberplatte 43 gesteuert, die zwischen der zweiten Zwischenposition und der Spielposition eine Bewegung in y-Richtung ausführt. Die Schieberplatte 43 drückt bei dieser Bewegung zwischen der zweiten Zwischenposition und der Spielposition die erste Führung 20, die zweite Führung 21, die dritte Führung 22 und die vierte Führung 23 entgegen den Vorspannkräften von der Informationsplatte 1 weg.

In der in der Fig. 10 dargestellten Spielposition wird die Informationsplatte 1 ausschließlich von dem Klemmteller 37 und dem Antriebsteller 38 gehalten. Durch Rotation des Antriebstellers 38 wird die Informationsplatte 1 in der Spielposition rotiert, und die auf der Informationsplatte 1 gespeicherten Informationen können mittels der Leseeinheit 30 gelesen werden. In der Spielposition ist die Laserplatte 35 mit der Basisplatte 31 und damit mit der Chassisplatte 3 nur über die Dämpfer 32, 33 und 34 gekoppelt. Äußere Vibrationen und Erschütterungen des Gehäuses 2 und der Chassisplatte 3 werden daher im Spielbetrieb mittels der Dämpfer 32, 33 und 34 von der Laserplatte 35 ferngehalten, sodaß die Leseeinheit 30 ohne Störungen durch äußere Vibrationen die auf der Informationsplatte 1 gespeicherten Informationen auslesen bzw. abspielen kann.

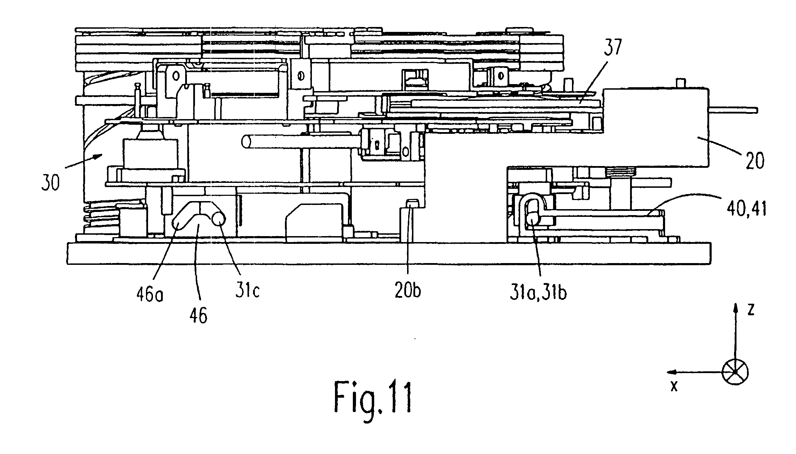

Fig. 11 zeigt eine Seitenansicht auf das Wechslergerät in der Spielposition. Gegenüber der in der Fig. 8 gezeigten zweiten Zwischenposition ist die Schieberplatte 43 in der y-Richtung verschoben worden, wodurch der erste Führungszapfen 31a, der zweite Führungszapfen 31b und der dritte Führungszapfen 31c in den V-förmigen Schiebeschlitzen 44a, 45a und 46a nach unten gedrückt worden sind. Dadurch ist auch die Leseeinheit 30 gegenüber der zweiten Zwischenposition abgesenkt worden.

Von der in den Fig. 7 und 9 dargestellten ersten Zwischenposition ist sowohl ein Transport der Informationsplatte 1 in die in den Fig. 10 und 11 dargestellte Spielposition möglich als auch ein Transport der Informationsplatte 1 in die Stapeleinheit 4.

Ausgehend von der ersten Zwischenposition gemäß Fig. 9 wird die Informationsplatte 1 zum Transport in die Stapeleinheit 4 auf der kurvenförmigen Ladebahn 28 in die Stapeleinheit 4 hinein gerollt. Der Antrieb erfolgt hierbei im wesentlichen von dem zweiten Transportrad 26, welches die Antriebsfunktion von dem ersten Transportrad 25 übernimmt. Die Abstützfunktion wird im wesentlichen von der vierten Führung 23 übernommen.

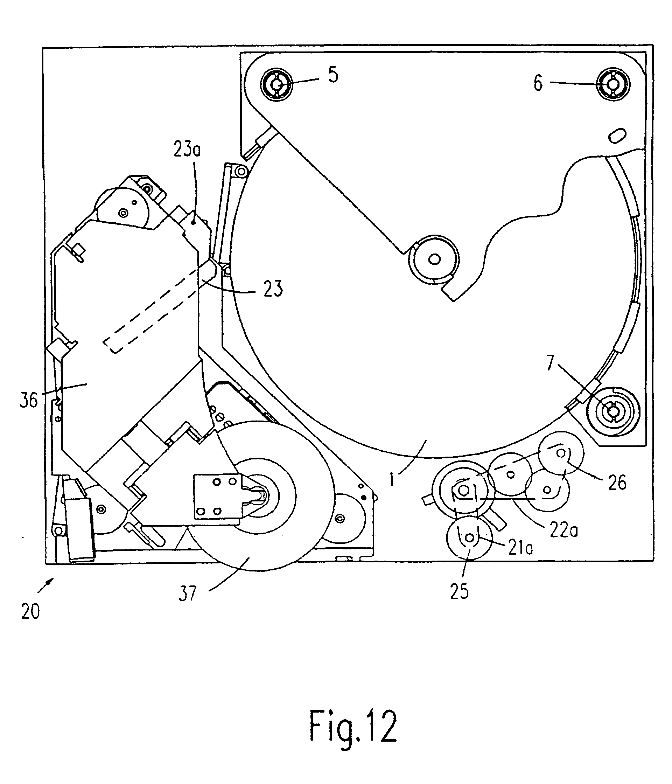

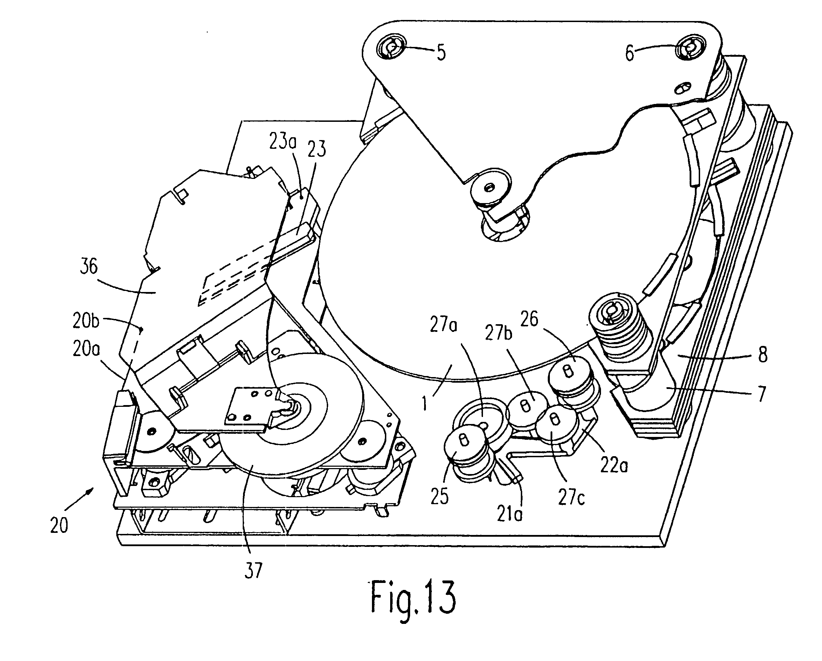

Die Fig. 12 und 13 zeigen das Wechslergerät mit der Informationsplatte 1 in der Ladeposition 16 gemäß Fig. 2, wobei die Fig. 12 eine Draufsicht und die Fig. 13 eine perspektivische Ansicht zeigt. Das zweite Transportrad 26 ist aus der Stapeleinheit 4 weggeschwenkt worden, so daß ausgehend von dieser in den Fig. 12 und 13 dargestellten Ladeposition 16 die Informationsplatte 1 nun zusammen mit dem ersten Ablagefach 8 gemäß Fig. 2 in eine der vier oberen Stapelpositionen 13a, 13b, 13c oder 13d mittels Rotation der Gewindespindeln 5, 6 und 7 transportiert werden kann. In umgekehrter Weise kann die Informationsplatte 1 aus der in der Fig. 13 dargestellten Ladeposition mittels Schwenken des zweiten Transportrades 26 gegen den Plattenrand 1a und entgegengesetzter Rotation des zweiten Transportrades 26 in die erste Zwischenposition und danach, angetrieben von dem ersten Transportrad 25, in die Auswurfposition transportiert werden.

In den Fig. 12 und 13 ist die Leseeinheit 30 vollständig aus dem Einwirkbereich der Stapeleinheit 4 herausgefahren.

## Patentansprüche

1. Wechsler-Gerät für Informationsplatten mit
- einer Stapeleinheit (4) zur Stapelung von wenigstens zwei Informationsplatten (1) in wenigstens zwei Stapelpositionen,
- einer Lese/Schreib-Einheit (30) zum Lesen von auf den Informationsplatten gespeicherten Informationen und/oder zum Schreiben von Informationen auf die Informationsplatten in einer Spielposition,
wobei eine Auswurfposition vorgesehen ist, in der jeweils eine Informationsplatte aus dem Gerät entnehmbar ist, und dass Transportmittel zum Transport der Informationsplatten auf einer kurvenförmigen Ladebahn (28) von der Auswurfposition in eine Ladeposition der Stapeleinheit vorgesehen sind,
**dadurch gekennzeichnet,**
**dass** die Spielposition zwischen der Auswurfposition und der Ladeposition vorgesehen ist und die Ladebahn (28) in einer Ladeebene vorgesehen ist.

2. Wechsler-Gerät nach Anspruch 1, **dadurch gekennzeichnet, dass** die Spielposition versetzt zu der direkten Verbindungslinie zwischen der Ladeposition und der Auswurfposition angeordnet ist.

3. Wechsler-Gerät nach Anspruch 1, **dadurch gekennzeichnet, dass** die Spielposition auf der Ladebahn liegt.

4. Wechsler-Gerät nach Anspruch 3, **dadurch gekennzeichnet, dass** zum Transport der Informationsplatten zwischen Auswurf-, Spiel-, und Ladeposition ein erster Transportmechanismus und zum Transport der Informationsplatten in die Stapelpositionen der Stapeleinheit ein zweiter Transportmechanismus vorgesehen ist,
wobei der erste Transportmechanismus zum Transport der Informationsplatten in der Ladeebene vorgesehen ist und der zweite Transportmechanismus zum Transport der Informationsplatten in einer vertikal zu der Ladeebene gerichteten Stapelrichtung.

5. Wechsler-Gerät nach Anspruch 4, **dadurch gekennzeichnet, dass** der erste Transportmechanismus wenigstens eine erste und eine zweite mit Nuten versehene, in der Ladeebene bewegbare Führung für den Plattenrand der Informationsplatte aufweist, wobei die zweite Führung wenigstens ein drehend antreibbares erstes Transportrad aufweist.

6. Wechsler-Gerät nach Anspruch 5, **dadurch gekennzeichnet, dass** die erste Führung eine passive Stützführung ist,
dass eine dritte Führung mit einem zweiten Transportrad vorgesehen ist,
dass eine vierte Führung als passive Stützführung vorgesehen ist,
dass die erste, die zweite, die dritte und die vierte Führung einseitig gelagerte, in der Ladeebene verschwenkbare Schwenkarme aufweisen, dass die erste, zweite, dritte und die vierte Führung in Richtung auf die kurvenförmige Ladebahn vorgespannt sind,
dass das erste Transportrad im wesentlichen zum Transport der Informationsplatten zwischen der Auswurfposition und einer Übergabeposition und das zweite Transportrad im wesentlichen zum Transport der Informationsplatten von der Übergabeposition in die Ladeposition vorgesehen ist.

7. Wechsler-Gerät nach Anspruch 6, **dadurch gekennzeichnet, dass** die erste und die dritte Führung um eine gemeinsame Schwenkachse gelagert sind.

8. Wechsler-Gerät nach Anspruch 1, **dadurch gekennzeichnet, dass** die Lese/Schreib-Einheit verschiebbar an einer Chassisplatte des Geräts angelagert ist.

9. Wechsler-Gerät nach Anspruch 1, **dadurch gekennzeichnet, dass** die Lese/Schreib-Einheit eine Basisplatte und eine Laserplatte aufweist, dass die Basisplatte und die Laserplatte mittels Dämpfern gekoppelt sind, dass die Basisplatte an der Chassisplatte verschiebbar angelagert ist und dass an der Laserplatte eine Klemmvorrichtung zum Festklemmen der Informationsplatte in der Spielposition und eine optische Einheit zum Lesen von auf der Informationsplatte gespeicherten Informationen angeordnet sind.

10. Wechsler-Gerät nach Anspruch 1, **dadurch gekennzeichnet, dass** die Lese/Schreib-Einheit in der vertikalen Richtung in die Spielposition transportierbar ist.

11. Wechsler-Gerät nach Anspruch 6, **dadurch gekennzeichnet, dass** die erste, die zweite, die dritte und die vierte Führung in der Spielposition von dem Plattenrand der Informationsplatte weggeschwenkt sind und dass das Wegschwenken der Führungen mittels der Basisplatte der Leseeinheit oder einer Schieberplatte gesteuert ist.

12. Wechsler-Gerät nach Anspruch 1, **dadurch gekennzeichnet, dass** die Stapeleinheit wenigstens zwei Ablagefächer, die zur Ablage von jeweils einer Informationsplatte vorgesehen sind, aufweist,
• dass die Ablagefächer mit wenigstens einer ein Gewinde aufweisenden Spindel gekoppelt sind und die Ablagefächer mittels Rotation der Spindel in einer vertikalen Richtung transportierbar sind, dass ein oberer und ein unterer Stapelbereich der Stapeleinheit zur Stapelung der Ablagefächer vorgesehen ist,
• dass die Ladeposition in einem Mittelbereich zwischen dem oberen und dem unteren Stapelbereich vorgesehen ist,
• dass jeweils eines der Ablagefächer mittels Rotation der Spindel in die Ladeposition überführbar ist und dass die Transportmittel zum Transport der Informationsplatte aus dem sich in der Ladeposition befindlichen Ablagefach in die Spielposition und in die Auswurfposition vorgesehen sind.

13. Wechsler-Gerät nach Anspruch 12, **dadurch gekennzeichnet, dass** der Mittelbereich in axialer Richtung der Spindel beiderseits der Ladeposition Abstandsbereiche aufweist, die einen axialen Abstand zwischen dem sich jeweils in der Ladeposition befindlichen Ablagefach und den axial benachbarten Ablagefächern in den Stapelpositionen sicherstellen.

14. Wechsler-Gerät nach Anspruch 12 oder 13, **dadurch gekennzeichnet, dass** die mittlere Gewindesteigung der Spindel in der Ladeposition kleiner als die mittlere Gewindesteigung in dem oberen und dem unteren Stapelbereich ist.

15. Wechsler Gerät nach einem der Ansprüche 13 oder 14, **dadurch gekennzeichnet, dass** die Gewindesteigung der Spindel in der Ladeposition im wesentlichen gleich Null ist.

16. Wechsler Gerät nach einem der Ansprüche 12 bis 15, **dadurch gekennzeichnet, dass** die mittlere Gewindesteigung in den Abstandsbereichen größer als die mittlere Gewindesteigung in dem oberen und dem unteren Stapelbereich ist.

17. Wechsler-Gerät nach einem der Ansprüche 12 bis 16, **dadurch gekennzeichnet, dass** zur Führung der Informationsplatten in den Ablagefächern der Stapeleinheit ein unterer und ein oberer Führungszapfen vorgesehen ist, der von oben bzw. von unten in die Mittelöcher der Informationsplatten einfahrbar ist.

18. Fahrzeug mit einem Wechsler-Gerät nach Anspruch 1.

## Claims

1. A changer apparatus for information discs, comprising
- a stacking unit (4) for stacking at least two information discs in at least two stacking positions,
- a read/write unit (30) for reading information stored on the information discs and/or writing information on the information discs in a play position,
wherein an eject position is provided in which an information disc can be removed from the apparatus, and wherein transport means are provided for the transport of the information discs from the eject position into a loading position of the stacking unit along a curve-shaped loading path (28),
**characterized in that** the play position has been provided between the eject position and the loading position, and **in that** the loading path (28) lies in a loading plane.

2. A changer apparatus as claimed in Claim 1, **characterized in that** the play position is offset from the direct connecting line between the loading position and the eject position.

3. A changer apparatus as claimed in Claim 1, **characterized in that** the play position is located on the loading path.

4. A changer apparatus as claimed in Claim 3, **characterized in that** a first transport mechanism has been provided for the transport of the information discs between the eject position, the play position and the loading position, and a second transport mechanism has been provided for the transport of the information discs into the stacking positions of the stacking unit, the first transport mechanism being adapted to move the information discs in the loading plane and the second transport mechanism being adapted to move the information discs in a stacking direction oriented vertically with respect to the loading plane.

5. A changer apparatus as claimed in Claim 4, **characterized in that** the first transport mechanism comprises at least a first and a second guide for the disc edge of the information disc, which guide is grooved and is movable in the loading plane, the second guide comprising at least one rotationally drivable first transport wheel.

6. A changer apparatus as claimed in Claim 5, **characterized in that** the first guide is a passive supporting guide,
there has been provided a third guide comprising a second transport wheel,
there has been provided a passive supporting guide as a fourth guide,
the first, the second, the third and the fourth guide comprise pivotal arms which are supported at one end and which are pivotable in the loading plane,
the first, the second, the third and the fourth guide are pre-loaded towards the curve-shaped loading path, and
the first transport wheel is essentially adapted to move the information discs between the eject position and a transfer position, and the second transport wheel is essentially adapted to move the information discs from the transfer position into the loading position.

7. A changer apparatus as claimed in Claim 6, **characterized in that** the first and the third guide are mounted on a common pivot.

8. A changer apparatus as claimed in Claim 1, **characterized in that** the read/write unit is movably supported on a chassis plate of the apparatus.

9. A changer apparatus as claimed in Claim 1, **characterized in that** the read/write unit comprises a base plate and a laser mounting plate, the base plate and the laser mounting plate are coupled by means of dampers, the base plate is slidably mounted on the chassis plate, and the laser mounting plate carries a clamping device for clamping the information disc in the play position and an optical unit for reading information stored on the information disc.

10. A changer apparatus as claimed in Claim 1, **characterized in that** the read/write unit is movable into the play position in the vertical direction.

11. A changer apparatus as claimed in Claim 6, **characterized in that** in the play position the first, the second, the third and the fourth guide are pivoted away from the disc edge of the information disc, and the pivoting away of the guides is controlled by means of the base plate of the read/write unit or a sliding plate.

12. A changer apparatus as claimed in Claim 1, **characterized in that** the stacking unit comprises at least two holder compartments for holding one information disc each,
• **in that** the holder compartments are coupled to at least one threaded spindle and are movable in a vertical direction by rotation of the spindles, and an upper stacking zone and a lower stacking zone of the stacking unit have been provided for stacking the holder compartments,
• **in that** the loading position has been provided in a central zone between the upper and the lower stacking zone, and
• **in that** one of the holder compartments is each time movable into the loading position by rotation of the spindles, and the transport means are adapted to move the information disc from the holder compartment, which is in the loading position, into the play position and into the eject position.

13. A changer apparatus as claimed in Claim 12, **characterized in that** in the axial direction of the spindles the central zone has spacing zones at both sides of the loading position, which spacing zones define an axial spacing between the holder compartment in its loading position and the axially adjacent holder compartments in their stacking positions.

14. A changer apparatus as claimed in Claim 12 or 13, **characterized in that** the average screwthread pitch of the spindles in the loading position is smaller than the average screwthread pitch in the upper and the lower stacking zone.

15. A changer apparatus as claimed in any one of the Claims 13 and 14, **characterized in that** the screwthread pitch of the spindles in the loading position is essentially zero.

16. A changer apparatus as claimed in any one of the Claims 12 to 15, **characterized in that** the average screwthread pitch in the spacing zones is greater than the average screwthread pitch in the upper and the lower stacking zone.

17. A changer apparatus as claimed in any one of the Claims 12 to 16, **characterized in that** a lower and an upper guide pin have been provided for guiding the information discs into the holder compartments of the stacking unit, which guide pins can engage the center holes of the information discs from above and from below, respectively.

18. A motor vehicle comprising a changer apparatus as claimed in Claim 1.

## Revendications

1. Changeur pour disques d'information avec
- une unité d'empilage (4) pour l'empilage d'au moins deux disques d'information (1) dans au moins deux positions d' empilage ;
- une unité de lecture/écriture (10) pour la lecture d'informations enregistrées sur les disques d'information et/ou pour l'écriture d'informations sur les disques d'information dans une position de lecture,
une position d'éjection dans laquelle un disque d'information peut respectivement être extrait de l'appareil étant prévue et des moyens de transport pour le transport de disques d'information sur une piste de chargement (18) courbée étant prévus de la position d'éjection dans la position de chargement de l'unité d'empilage,
**caractérisé en ce**
**que** la position de lecture est prévue entre la position d'éjection et la position de chargement et la piste de chargement (18) est prévue dans un plan de chargement.

2. Changeur selon la revendication 1, **caractérisé en ce que** la position de lecture est disposée en décalage par rapport à la ligne de liaison directe entre la position de chargement et la position d'éjection.

3. Changeur selon la revendication 1, **caractérisé en ce que** la position de lecture se trouve sur la piste de chargement.

4. Changeur selon la revendication 3, **caractérisé en ce qu'**il est prévu un premier mécanisme de transport pour le transport des disques d'information entre la position d'éjection, de lecture et de chargement et un deuxième mécanisme de transport pour le transport des disques d'information dans les positions d'empilage de l'unité d'empilage, le premier mécanisme de transport étant prévu pour le transport des disques d'information dans le plan de chargement et le deuxième mécanisme de transport pour le transport des disques d'information dans une direction d'empilage orientée verticalement par rapport au plan de chargement.

5. Changeur selon la revendication 4, **caractérisé en ce que** le premier mécanisme de transport présente au moins des première et deuxième glissières dotées de rainures et déplaçables dans le plan de chargement pour le bord de disque du disque d'information, la deuxième glissière présentant au moins une première roue de transport à entraîner par rotation.

6. Changeur selon la revendication 5, **caractérisé en ce que** la première glissière est une glissière d'appui passive,
qu'une troisième glissière est prévue avec une deuxième roue de transport,
qu'une quatrième glissière est prévue comme une glissière d'appui passive,
que les première, deuxième, troisième et quatrième glissières présentent des bras pivotants logés unilatéralement et pivotant dans le plan de chargement, que les première, deuxième, troisième et quatrième glissières sont précontraintes dans la direction de la piste de chargement courbée,
que la première roue de transport est prévue essentiellement pour le transport des disques d'information entre la position d'éjection et une position de transfert et la deuxième roue de transport essentiellement pour le transport des disques d'information de la position de transfert dans la position de chargement.

7. Changeur selon la revendication 6, **caractérisé en ce que** les première et troisième glissières sont logées autour d'un axe de pivotement commun.

8. Changeur selon la revendication 1, **caractérisé en ce que** l'unité de lecture/écriture est logée à coulissement sur une plaque de châssis de l'appareil.

9. Changeur selon la revendication 1, **caractérisé en ce que** l'unité de lecture/écriture présente une plaque de base et une plaque laser, que la plaque de base et la plaque laser sont couplées à l'aide d'amortisseurs, que la plaque de base est logée à coulissement sur la plaque de châssis et qu'un dispositif de serrage pour le blocage du disque d'information dans la position de lecture et une unité optique pour la lecture d'informations enregistrées sur le disque d'information sont disposés sur la plaque laser.

10. Changeur selon la revendication 1, **caractérisé en ce que** l'unité de lecture/écriture peut être transportée en direction verticale dans la position de lecture.

11. Changeur selon la revendication 6, **caractérisé en ce que** les première, deuxième, troisième et quatrième glissières sont pivotées dans la position de lecture depuis le bord de disque du disque d'information et que le pivotement des glissières est commandé à l'aide de la plaque de base de l'unité de lecture ou d'une plaque de tiroir.

12. Changeur selon la revendication 1, **caractérisé en ce que** l'unité d'empilage présente au moins deux tiroirs de réception qui servent à la réception respective d'un disque d'information,
• que les tiroirs de réception sont couplés avec au moins une broche présentant un filet et les tiroirs de réception peuvent être transportés par rotation de l'axe dans une direction verticale,, que des zones d'empilage supérieure et inférieure de l'unité d'empilage sont prévues pour l'empilage des tiroirs de réception,
• que la position de chargement est prévue dans une zone centrale entre les zones d'empilage supérieure et inférieure,
• qu'un des tiroirs de réception peut respectivement être amené par rotation de la broche dans la position de chargement et que les moyens de transport pour le transport du disque d'information hors du tiroir de réception se trouvant dans la position de chargement, dans la position de lecture et dans la position d'éjection sont prévus.

13. Changeur selon la revendication 12, **caractérisé en ce que** la zone centrale en direction axiale de la broche présente de part et d'autre de la position de chargement des zones d'espacement qui assurent une distance axiale entre le tiroir de réception se trouvant respectivement dans la position de chargement et les tiroirs de réception voisins axialement dans les positions d'empilage.

14. Changeur selon l'une des revendications 12 ou 13, **caractérisé en ce que** la pente moyenne du filet de la broche dans la position de chargement est inférieure à la pente moyenne du filet dans les zones d'empilage supérieure et inférieure.

15. Changeur selon l'une des revendications 13 ou 14, **caractérisé en ce que** la pente du filet des broches dans la position de chargement est essentiellement égale à zéro.

16. Changeur selon l'une des revendications 12 à 15, **caractérisé en ce que** la pente moyenne du filet dans les zones d'espacement est supérieure à l'augmentation moyenne du filet dans les zones d'empilage supérieure et inférieure.

17. Changeur selon l'une des revendications 12 à 16, **caractérisé en ce que**, pour le guidage des disques d'information dans les tiroirs de réception de l'unité d'empilage, des tourillons de guidage inférieur et supérieur sont prévus et peuvent être introduits par le haut ou par le bas dans les orifices centraux des disques d'information.

18. Véhicule avec un changeur selon la revendication 1.
